Europäisches Patentamt

European Patent Office

Office européen des brevets

(19)

(11) Publication number: **0 095 187**
**B1**

(12) **EUROPEAN PATENT SPECIFICATION**

(45) Date of publication of patent specification: **15.10.86**

(21) Application number: **83105135.4**

(22) Date of filing: **24.05.83**

(51) Int. Cl.⁴: **F 24 J 2/24,** F 24 F 5/00,
F 24 J 2/34

(54) **Collector of solar energy, having a continuous surface, construction process and use thereof in air-conditioning plants.**

(30) Priority: **25.05.82 IT 2145682**

(43) Date of publication of application:
**30.11.83 Bulletin 83/48**

(45) Publication of the grant of the patent:
**15.10.86 Bulletin 86/42**

(84) Designated Contracting States:
**AT BE CH DE FR GB IT LI LU NL SE**

(56) References cited:
**DE-A-2 850 669**
**DE-A-2 942 147**
**DE-A-3 001 023**
**DE-A-3 008 610**
**DE-A-3 025 623**
**GB-A-2 062 213**

(73) Proprietor: **STIFFLER, Mario**
**Via Ai Ronchi**
**CH-6936 Cademario (CH)**

(72) Inventor: **STIFFLER, Mario**
**Via Ai Ronchi**
**CH-6936 Cademario (CH)**

(74) Representative: **Faggioni, Marco, Dr. Ing. et al**
**FUMERO - Studio Consulenza Brevetti**
**Widenmayerstrasse 4/I**
**D-8000 München 22 (DE)**

Courier Press, Leamington Spa, England.

# Description

The use of solar energy collectors, apt to pick up sun radiation more or less efficiently and turn it into sensitive heat of a working fluid (usually water), is now of common knowledge. In most cases, such collectors make use of a collecting surface with low reflectivity, wherein a series of void channels for the passage of the working fluid are obtained, said surface being covered by a transparent surface apt to create a sealed space, which produces a greenhouse effect allowing to overheat the collecting surface above room temperature.

In particular, therefore, the solar energy collectors of known type comprise a basic layer formed of material with high thermal insulation, over which is arranged a tubing system through which flows a heat exchange fluid, the whole being covered by an external transparent layer. The object of the basic layer is obviously to reduce to a minimum the heat losses through that part of the collector which is not directly exposed to the sun rays.

The solar energy collectors of the type described above have a great number of drawbacks, which have up to date limited their possibilities and diffusion.

In the first place, from a functional point of view, the plants connected thereto store energy under form of sensitive heat of the working fluid, and thus do not have the possibility to store large quantities of energy, unless resorting to huge deposits of heated fluid, with the problems of bulk and dispersion deriving therefrom. This has so far limited the use of solar collectors to the hot water production field, and the field of room conditioning has been dealt with only at an experimental level and merely for the new buildings provided with widely extended collecting surfaces. In any case, the temperature of the working fluid is very changeable, as it is tied to the daily behaviour of the sun and, even more, to the seasonal course, and it prevents the utilization of other types of heat which require a more constant temperature, as for example the production of electric energy.

In the second place, from a structural point of view, the construction of these collectors involves considerable costs, both for the materials employed and for the technology required to realize the single panels. In fact, these panels — also because, as said, they have to be provided with a sealed space between the collecting surface and the transparent surface, so as to prevent any possible condensate on this latter — may only be constructed in rather complex and very costly plants.

Furthermore, the finished panel is particularly fragile, quite heavy and very difficult to install, especially when it requires to be inserted into surfaces designed for coverages which have to fully preserve their characteristics of impermeability.

It finally occupies an area which cannot be otherwise utilized, as the panel is neither capable of supporting any load, nor can it be soiled in any way.

It should be noted at last that — due to the different stresses to which they are subjected (meteorologic, thermal, mechanical, from pollution, and the like) — the materials forming the panels are exposed to exceptional wear. In particular, the transparent surface often undergoes a very fast time-decay of its characteristics, resulting into a positive reduction of the radiation transmitted to the underlying collecting surface.

An example of such collectors of known type is described in the DE—A—2850669. This patent describes a heat exchanger which — according to different embodiments — may be used both to emit heat, especially in panel heating elements, and to receive heat in a solar energy collector. In greater detail, the specification describes a solar energy collector which is mounted on a support formed by roof girders. To these girders there is fixed a "HOLORIB" plate, provided with a plurality of trapezoidal grooves housing a piping system, into which circulates the heat exchange fluid. The piping system is placed in thermal contact with the plate through a filling of metal particles. The plate is finally covered with glass shapes, apt to create a greenhouse effect, that is, a rise in the temperature of the air between the plate and the glass, above room temperature. The empty parts of the plate, on the side opposite to that of the glass shapes, are filled with a suitable layer of insulating material.

The object of the present invention is therefore to supply an improved collector of thermal energy, and particularly of solar energy, of reduced cost and the construction of which can easily be carried out directly at the building yard, which is apt to overcome the aforementioned drawbacks. In particular, it eliminates the requirement to create a greenhouse effect and thus the need for a transparent coverage.

This result is obtained, according to the present invention, by means of a collector of thermal energy, and particularly of solar energy — of the type comprising a basic layer formed of material with high thermal insulation, over which there is arranged a tubing system, through which flows a heat exchange fluid — characterized in that it comprises a composite layer structure, obtained by laying the single layers directly on the site of use and being formed, starting from the side facing the source of energy, of:

— a first layer of elastomeric material, with high surface roughness and waterproof, having very low radiation and reflectivity, high elastic strain and capability to stand mechanical stresses without tearing;

— a second layer of concrete with additives, having high thermal conductivity, into which is buried said system of tubes;

— a third layer of material with high reflectivity;

— a fourth layer of said material with high thermal insulation.

According to a first characteristic of the present invention, said first layer of elastomeric material consists of a rubber latex of black colour, which is caused to coagulate only at the moment of use, by spraying and simultaneous mixing with a suitable coagulating agent.

According to another characteristic, the tube system contained in said second layer is formed of a corrugated flexible tubing of plastic material, arranged as a serpentine.

According to a further characteristic, the solar energy collector of the present invention forms a continuous waterproof element, practicable by pedestrians and motor vehicles, for the roofing of buildings.

According to a still further characteristic of the present invention — when the collector is required to have a self-contained storage capacity — said second layer comprises furthermore storage elements of thermal energy, under form of latent heat, consisting of sealed cells containing a chemical hydrate compound having a high latent heat of crystallization, which can be selected so as to have a temperature of crystallization at a predetermined point of the interval between 0° and 100°C.

Finally, according to an even further characteristic, in the event that the source of energy being utilized should have a high temperature, the collector is provided with a surface layer of refractory material.

The solar energy collector with the composite structure of the present invention is constructed on the site of use, starting from prefabricated elements, with a particularly suitable process comprising the stages of:
— arranging onto a load bearing surface said fourth layer of insulating material in preformed semirigid panels, or by spraying;
— arranging onto the fourth layer said third layer of material with high reflectivity;
— arranging onto the third layer said serpentine tubing, disposed into one or more circuits the ends of which project from the collector;
— pouring a layer of concrete with additives, having high thermal conductivity, after previous possible laying of a metal reinforcement; and
— covering the whole with said first layer applied by spraying, covering also the surfaces close to and adjoining the collector, so as to form a single seamless waterproof surface.

The solar energy collector according to the present invention is preferably used in an air-conditioning plant of a building, characterized by comprising:
— one or more collecting surfaces consisting of said collector;
— one or more conditioning surfaces, consisting of a layer of said thermal energy storage elements into which is buried a system of tubes, through which flows a heat exchange fluid, the whole being dislocated into the surface layer of the building masonry structures, or into some other suitable dislocation;
— a central storage reservoir, formed of a plurality of layers of said thermal energy storage elements plunged into a heat exchange fluid;
— an interconnection, regulation, pumping and control system, connecting said tube systems of the collecting and conditioning surfaces to said central reservoir.

The aforementioned air-conditioning plant can be usefully associated with a plant for the production of electric energy, characterized by comprising furthermore:
— a serpentine through which flows a low-boiling fluid, arranged inside said central storage reservoir;
— a turbine for the production of electric energy, operated by the low-boiling fluid vaporized in said serpentine;
— a condenser of the low-boiling fluid, arranged downstream of said turbine for the feeding of said serpentine.

The invention will anyhow be described in further detail hereinafter, with reference to an embodiment wherein the collector is used as coverage for the roof of a building, and illustrated in the accompanying drawings, in which:

Figure 1A is a diagrammatic cross-section view of the solar energy collector according to the present invention, arranged as coverage for the roof of a building;

Figure 1B is a view similar to that of figure 1A, wherein part of the insulating layer is replaced by thermal energy storage elements;

Figure 2 is a block-diagram of the air-conditioning plant using the collector of figure 1A; and

Figure 3 is a cable-and-trunk schematic of the electric energy production system associated to the air-conditioning plant shown in figure 2.

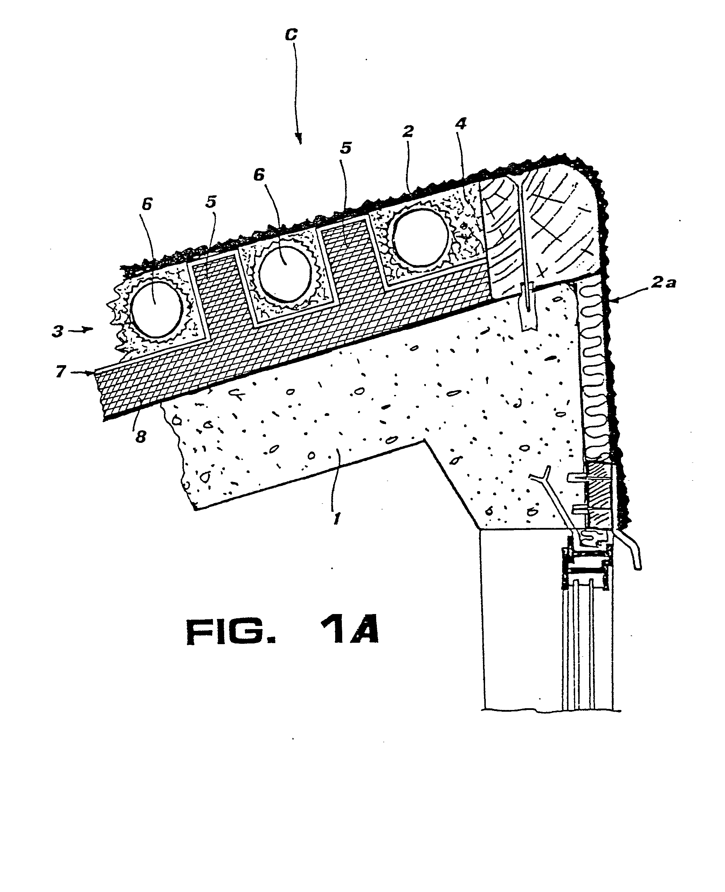

Figure 1A shows diagrammatically, in a cross section, the slab 1 forming the roof of a building. The solar energy collector of the present invention is laid directly in contact with the slab 1, and it consists of a composite structure, obtained on site, comprising four layers each having a different function.

Starting from the outward part, i.e. from the surface of the collector C exposed to sun radiation, the following layers are obtained.

A first layer 2, formed of a rubber latex of black colour, which is caused to coagulate only at the moment of use by addition of a suitable coagulating agent.

The latex employed will suitably be a latex of natural origin, containing the proper stabilizing and emulsifying elements. The coagulating agent is $CaCl_2$ which, in the preferred case of application by spraying, is mixed with the latex directly in the spray.

The covering thus obtained has a high surface roughness, with low values of radiation and reflectivity, while having excellent characteristics of elastic strain and of resistance to mechanical stresses without tearing.

A second layer 3, consisting of a concrete mixture 4 with an additive apt to increase its characteristics of thermal conductivity, into which is buried a system of tubes 6, arranged as a serpentine, a heat exchange fluid — suitably consisting of water — flowing in said tubes.

The system of tubes 6, buried in the layer 3, is formed of one or more circuits of a corrugated flexible tubing of plastic material, allowing a high coefficient of heat transmission between concrete and heat exchange fluid.

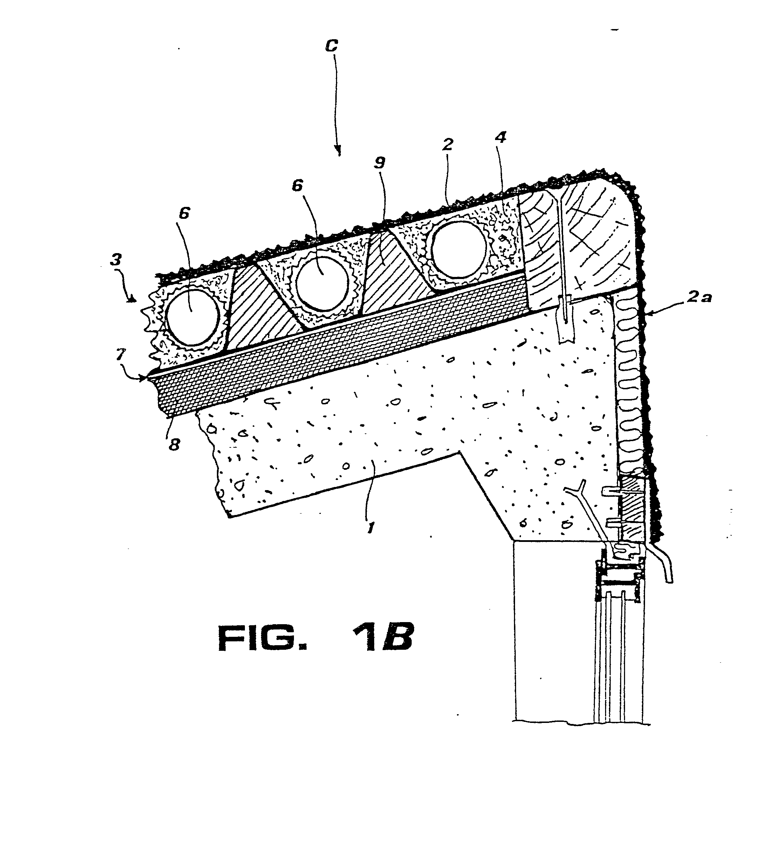

When the collector C has to support heavier loads than those normally weighing on the covering of a roof, for instance for pavings, roads, ramps or the like, the mixture 4 will have a greater thickness than that shown in figure 1, and it will comprise a wire net or other suitable reinforcement (not shown), which will give it the required mechanical characteristics of strength.

A third layer 7 of material with high reflectivity, formed of a simple aluminium sheet, and finally a fourth and last layer 8, placed in direct contact with the slab 1 and formed of insulating material, as for example foamed polyurethan, or else closed cell extruded polyethylene.

The layer 8 may advantageously by preformed with a series of reliefs 5 of cubic, frusto-pyramidal or frusto-conical shape, apt to delimit the free spaces available for the tubes 6, facilitating their positioning and also forming with their tops a convenient plane for smoothing the concrete layer 4. This shape of the layer 8 furthermore allows to reduce the total quantity of concrete used and, thus, the weight of the manufactured article, finally favouring the conveyance of the heat absorbed by the surface 2 towards the tubes 6.

The layer 7 is normally pre-applied on the layer 8, forming an integrating part thereof, and it can be totally omitted if there is requirement to limit the costs.

The high quality of the rubber layer 2, combined with the mechanical characteristics of the underlying layer 3, allow to use the collector C as an element for any type of coverages, even if subjected to pedestrian or vehicular traffic, without disturbing the working process of the collector or deteriorating its components. The rubber layer 2 extends up to covering also the peripheral gutter and drain areas of the roofing, indicated by 2a in figure 1, creating a single waterproof mantle which binds the collector C to the surrounding structure, and preventing any type of humidity infiltration.

Figure 1B illustrates a collector according to the present invention, wherein the reliefs 5 of the layer 8 have been replaced by storage elements 9 of thermal energy under form of latent heat.

This type of collector is particularly appropriate when the same is required to have a certain capacity of storage, such as to make more constant in time the temperature level of the heat exchange fluid circulating in the collector. Such a type of collector is used, for example, in desalting plants, or in climates characterized by fast and frequent temperature variations or by high day/night temperature changes.

The energy storage elements 9, used in the present invention, are available in the form of polyethylene belts comprising a plurality of sealed cells containing a chemical hydrate compound having a high latent heat of crystallization and a temperature of crystallization which can be prefixed at will within the interval included between 0° and 100°C. Of course, also elements 9 of a different type could be adopted, provided they allow to store considerable quantities of thermal energy at a prefixed temperature.

The technique used for constructing and applying the collector according to the present invention, requires no machinery, but simply a number of elementary operations for laying the aforedescribed elements directly on the site of use.

The surface onto which is applied the collector C is first of all covered with a layer 8 of insulating material in the form of semirigid panels, sealed together in known manner. Alternatively, and particularly when applying the collector C onto inclined surfaces, the layer 8 can be applied by spraying. The layer 7, formed of an aluminium sheet, is then placed over the insulating layer 8, unless such sheet has already been pre-applied on said layer 8.

At this stage, the tubes 6 are laid onto the layer 7, into one or more appropriate circuits, said tubes allowing the passage of the heat exchange fluid. The tubes 6 are obviously arranged in such a manner that the ends of the circuits formed therefrom come to find themselves in a single area at the periphery of the collector C, from which they may easily be connected to the other tubings of the control systems, better described hereinafter.

In the case of the collector illustrated in figure 1B, the laying of the tubes 6 is evidently preceded by the positioning of the polyethylene belts containing the heat storage elements 9.

After having thus prearranged the tubes 6, a concrete mixture 4 — preferably mixed with an additive apt to increase its thermal conductivity — is poured on said tubing. The casting of the concrete mixture 4 may be preceded — in case that the collector C is designed to support loads — by the laying of a wire net or other metal reinforcement.

The construction of the collector C is completed — after setting of the mixture 4 — by applying the rubber layer 2. According to a preferred technique of the present invention, use is made of a rubber latex, which is applied by spraying with simultaneous addition of a solution of $CaCl_2$, as coagulating agent. One thereby obtains a continuous, seamless, waterproof layer, with a very rough surface of black colour, extending so as to cover all those elements surrounding the collector (drain-pipes, gutters, waste-pipes and the like), which are thus simultaneously waterproofed.

It should be noted at this point — as it besides appears evident from the process described hereabove — that the collector object of the present invention can be applied on any surface, whether horizontal or inclined, and whether in good, bad or even very bad maintenance conditions, with-

out having to resort to any costly operations for preparing said surface.

The working of the solar energy collector according to the present invention will now be described with reference to an air-conditioning plant, with or without production of electric energy, which forms a preferred use thereof.

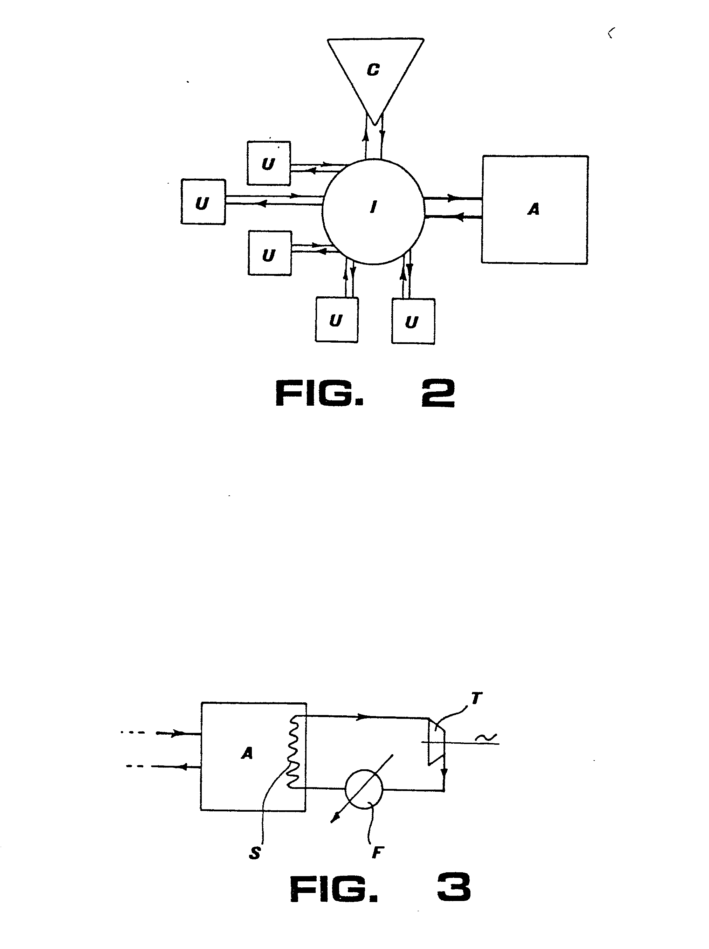

The air-conditioning plant is illustrated in the block-diagram of figure 2, while the cable-and-trunk schematic concerning the production of electric energy is shown in figure 3. In the following description, reference will be made to these two figures, assuming that the source of thermal energy is the sun. The principle remains unvaried in the event that the source of thermal energy should be of a different type — for instance, regeneration heat from exothermic chemical processes, or from hot exhaust smokes or gases — but for the precaution that the collector C will in this case have to be covered with a layer of refractory material (not shown), to prevent the extreme temperature of the energy source from damaging the surface layer of the collector.

The incident radiation coming from the sun hits the collector C onto its rubber layer 2. Since this latter has a very low reflectivity, almost the entire incident radiation is absorbed, thanks also to the fact that the particularly rough surface easily "seizes" any small part of reflecting radiation. The radiations which are not immediately absorbed by the layer 2, cross the layer 3 transferring part of their own energy, and they eventually get reflected by the aluminium sheet of the layer 7, crossing once more the layer 3. It can thus be said that only a negligible part of the incident radiation is not absorbed by the layer 2 or by the layer 3.

As a result, these layers obviously undergo a heating process and they therefore tend to transfer heat onto the surrounding elements. Thanks to the scarce radiating power of the rubber, the layer 2 transfers heat almost exclusively by conduction and, due to the high ratio between the conduction coefficient of the mixture 4 and the air conduction coefficient, the amount of heat transferred by conduction from the layer 2 to the environment is relatively modest. On the opposite side, the layer of insulating material 8 limits the transfer of heat by conduction to the underlying slab 1 (the transfer of heat by radiation being instead stopped by the reflecting layer 7).

The collector C therefore undergoes a concentrated heating action in its inner layer 3, containing the tubes 6 and, possibly, the storage elements 9. These last ones, as already said, contain a chemical hydrate compound having a high latent heat of crystallization and a temperature of crystallization which can be preset — during construction — at any point of the interval between 0° and 100°C. The temperature of crystallization is chosen according to the conditions of radiation and to the type of thermal energy source, so as to keep as close as possible to the average temperature existing inside the collector C. In the case under consideration, making use of a solar energy source, said temperature may for instance be included in the interval between 50° and 60°C.

The air-conditioning plant making use of the collector C comprises furthermore a series of air-conditioning surfaces U, a heat storage central reservoir A and an interconnection and control system I.

The working of said plant will now be described with reference to the collector illustrated in figure 1B. It is evident that the working of the simpler collector shown in figure 1A is perfectly similar. It will have to be considered that, in this case, the function performed by the storage elements 9 will cease, said elements being replaced by the reliefs 5 of insulating material, which have the simple task to convey most of the heat absorbed by the surface 2 towards the tubes 6.

The air-conditioning surfaces U are distributed in the building to be conditioned in the most suitable position (floors, recesses for radiators in the event of restructuring old plants, walls and the like), and they have the same structure as the layer 3 of the collector C. Obviously, in this case, the temperature of crystallization of the heat storage elements 9 will be chosen according to the desired air conditioning temperature. For instance, in the case of buildings, said temperature may be included in the interval between 23° and 28°C, so as to obtain a room temperature between 18° and 23°C (the 5°C temperature jump corresponds to that existing between the external part and the internal part of the conditioning surfaces U).

The central storage reservoir A is formed of an outwardly insulated tank, containing a large number of storage elements 9 plunged in the heat exchange fluid. In this case, the elements 9 have a temperature of crystallization which is slightly above that of the elements 9 of the conditioning surfaces U, in order to facilitate heat exchange. Alternatively, it is possible to provide in the reservoir A for two areas wherein the elements 9 have different temperatures of crystallization. A first area, with a lower temperature, designed to satisfy the requirements of air-conditioning and hot water for sanitary use, and a second area, with a higher temperature, for the production of electric energy, as better described hereinafter.

The collector C, the conditioning surfaces U and the central storage reservoir A are finally mutually connected by an interconnection, regulation and pumping system I, equipped with a regulation and control electronic unit which coordinates the working of the entire plant, on supply of information sent by thermostats appropriately dislocated in the plant.

As the plant starts to work, the collector C heats up to bringing the elements 9 to their temperature of crystallization, at which temperature they absorb heat under form of latent heat, starting to gradually melt in their own water of crystallization. As soon as the temperature inside the collector C rises above the temperature existing in the reservoir A, the system I provides to circulate the heat exchange fluid inside the tubes 6 cooling the elements 9, preventing the complete dissolving of the chemical compound contained therein and transferring the heat inside the reservoir A, and precisely to the elements 9 housed therein, which have a lower temperature of crystallization than the elements 9 present in the collector C. The process continues with a prolonged storage of heat, under form of latent heat of crystallization, inside the reservoir A.

The system I of course provides to interrupt the circulation of the heat exchange fluid inside the collector C, as soon as the temperature therein falls below the temperature existing in the central reservoir A, due to lack of sun radiation (night time, cloudiness, winter season).

At the same time, the system I provides to circulate the heat exchange fluid within the tubes existing in the conditioning surfaces U, keeping the latter at their operative temperature (temperature of crystallization of the elements 9 connected thereto). It is evident, from what has been said, that the surfaces U have a double function, namely they let out heat when the room temperature is below their operative temperature, while they absorb heat when opposite conditions occur, transferring it then to the reservoir A. The room temperature is hence under perfect control, both during the winter and during the summer season.

An accurate reckoning of the number of elements 9 present in the storage reservoir A, allows to store in the summer season an amount of thermal energy sufficient to overcome, without any problems, the whole winter season, even in scarcely favourable conditions of sun radiation.

From the above, it is evident that the entire plant — for what concerns the chemical transformation of the compound contained in the elements 9 — normally remains in an isothermal state of incomplete transformation, and thus in conditions allowing a perfect control of the temperatures, and it is only during the summer season that it can reach the conditions wherein all the elements 9 of the reservoir A, as well as those of the conditioning surfaces U and of the collector C, are completely dissolved. In this case, the temperature inside the reservoir A tends to rise and the possibility to obtain a conditioning from the surfaces U (in the sense of absorbing heat from the environment) during the summer season, would thereby be lost.

It is evidently possible to dispose of this heat excess by simply cooling down with water the reservoir A, but this is by no means convenient, unless requiring to heat a considerable amount of water (for instance, in greenhouses or in other industrial applications). In the application to air-conditioning for buildings, according to the present invention, it has instead been found very convenient — for this purpose — to equip the air conditioning plant with a system for producing electric energy, as shown in figure 3.

This system is essentially formed of a closed circuit containing a low-boiling fluid which is vaporized inside a serpentine S arranged in the hottest area of the reservoir A, to operate a turbine T which produces electric energy. The fluid coming out the turbine T is completely recondensed in the condenser F and sent back to the serpentine S.

In this way, there is a further possibility to control the temperature of the reservoir A, with parallel production of electric energy which, especially in the months of higher sun radiation, may form a valid contribution to electricity consumptions. In the winter months, the production of electric energy may instead help to make the above plant autonomous and independent from any requirement of connection to the mains, particularly for what concerns the working of the system I.

As it appears evident from the above description, the thermal energy collector according to the present invention and the respective plant making use thereof, are apt to brilliantly solve the various problems pointed out further above in connection with the utilization of thermal energy from sun radiation or from other sources. In particular, they allow:

— to greatly reduce the costs, both for what concerns the elements employed in the structure, and for what concerns the application thereof, which merely requires the simple equipment already available to the operators in the field;

— to positively avoid the use of transparent and, in any case, particularly delicate surfaces, with the possibility to use as collectors the surfaces already designed for other uses (ramps, stairs, terraces with pedestrian traffic, and the like);

— the possibility to be placed, in substitution for other types of coverages, directly in contact with the structure of the building, with consequent saving of costs;

— to store great quantities of heat, under form of latent heat, in a relatively limited space and at a relatively low temperature, such that it will anyhow create no problems of heat insulation;

— to be used both as a plant for producing heat and as a plant for air-conditioning in summer;

— the simultaneous production of electric energy.

**Claims**

1. A collector of thermal energy and particularly of solar energy — of the type comprising a basic layer (8) formed of material with high thermal insulation, over which there is arranged a tubing system (6) through which flows a heat exchange fluid — characterized in that it comprises a composite layer structure, obtained by laying the single layers directly on the site of use and being formed, starting from the side facing the source of energy, of:

— a first layer (2) of elastomeric material, with high surface roughness and waterproof, having very low radiation and reflectivity, high elastic strain and capability to stand mechanical stresses without tearing;

— a second layer (4) of concrete with additives, having high thermal conductivity, into which is buried said system of tubes (6);

— a third layer (7) of material with high reflectivity;

— a fourth layer (8) of said material with high thermal insulation.

2. A collector as in claim 1, wherein said first layer (2) consists of a natural rubber latex of black colour, mixed with a coagulating agent only at the moment of its application.

3. A collector as in claim 1, wherein the system of tubes (6) included in said second layer (4) is formed of a corrugated flexible tubing of plastic material, arranged as a serpentine.

4. A collector as in claim 1, wherein said second layer (4) also comprises storage elements (9) of thermal energy, under form of latent heat, consisting of sealed cells containing a chemical hydrate compound having a high latent heat of crystallization.

5. A collector as in claim 1, wherein said second layer (4) furthermore comprises a wire net or other metal reinforcement structure for the concrete layer.

6. A collector as in claim 1, wherein said third layer (7) consists of an aluminium sheet.

7. A collector as in claim 1, wherein said fourth layer (8) consists of a foamed polyurethan.

8. A collector as in claim 1, wherein said fourth layer (8) consists of closed cell extruded polyethylene.

9. A collector as in any one of the preceding claims, characterized in that it forms a continuous waterproof element, practicable by pedestrians and motor vehicles, for the roofing of buildings.

10. A collector as in claim 9, wherein said first layer (2) of waterproof material extends up to covering the peripheral areas of the roofing, including gutters and/or drains.

11. A collector as in any one of the preceding claims, utilized with high temperature sources of thermal energy, wherein the surface layer consists of refractory material.

12. Process for the construction of a collector with composite structure, of the type comprising a basic layer (8) formed of material with high thermal insulation, over which there is arranged a tubing system (6) through which flows a heat exchange fluid, according to any one of the preceding claims, characterized by comprising the following stages, carried out directly on the site of use:

— arranging onto a load bearing surface (11) said fourth layer (8) of said insulating material is preformed semirigid panels, or by spraying;

— arranging onto the fourth layer (8) said third layer (7) of material with high reflectivity;

— arranging onto the third layer (7) said serpentine tubing (6), disposed into one or more circuits, the ends of which should project from the collector;

— pouring a layer of concrete (4) with additives, having high thermal conductivity, after previous possible laying of a metal reinforcement; and

— covering the whole with said first layer (2) applied by spraying, covering also the surfaces close to and adjoining the collector, so as to form a single seamless waterproof surface.

13. Collector as in any one of the claims 1 to 11, used in an air-conditioning plant for a building, characterized in that it comprises:

— one or more collecting surfaces (C) consisting of the collector according to any one of the claims 1 to 11;

— one or more conditioning surfaces (U) consisting of a layer of storage elements of thermal energy under form of latent heat, into which is buried a system of tubes through which flows a heat exchange fluid, the whole being dislocated into the surface layer of the building masonry structures, or into some other suitable dislocation;

— a central storage reservoir (A) formed of a plurality of layers of thermal energy storage elements plunged into a heat exchange fluid;

— an interconnection, regulation, pumping and control system (I), which connects said tube systems of the collecting and conditioning surfaces to said central reservoir.

14. Collector as in claim 13, used in a plant for the production of electric energy, characterized by comprising furthermore:

— a serpentine (S) through which flows a low-boiling fluid, arranged inside said central storage reservoir (A);

— a turbine (T) for the production of electric energy, operated by the low-boiling fluid vaporized in said serpentine;

— a condenser (F) of the low-boiling fluid, arranged downstream of said turbine for the feeding of said serpentine.

**Patentansprüche**

1. Kollektor für Wärmeenergie und insbesondere für Sonnenenergie — von der Art, daß er eine Basisschicht (8) aufweist, die aus einem Material mit hoher Wärmeisolierung hergestellt und über der eine Röhrensystem (6) angeordnet ist, durch welches ein Wärmeaustauschfluid strömt —, dadurch gekennzeichnet, daß er einen Schichtaufbau aufweist, der dadurch erhalten wird, daß die einzelnen Schichten direkt am Verwendungsort verlegt wurden, und der, angefangen mit der Seite, die der Energiequelle zugewandt ist, gebildet wird von:

— einer ersten Schicht (2) aus elastomerem Material, mit hoher Oberflächenrauhigkeit und wasserdicht, die sehr niedrige Abstrahlung und Reflexionskraft, hohe elastische Verformbarkeit und die Fähigkeit aufweist, mechanischen Belastungen zu widerstehen, ohne zu reißen;

— einer zweiten Schicht (4) aus Beton mit Zusatzstoffen, die eine hohe Wärmeleitfähigkeit aufweist und in die das besagte System von Röhren (6) hineinverlegt ist;

— einer dritten Schicht (7) aus Material mit hoher Reflexionskraft;

— einer vierten Schicht (8) aus besagtem Material mit hoher Wärmeisolierung.

2. Kollektor nach Anspruch 1, wobei besagte erste Schicht (2) aus einem natürlichen Kautschuklatex von schwarzer Farbe besteht, der erst zum Zeitpunkt seiner Anwendung mit einem Koagulationsmittel vermischt wird.

3. Kollektor nach Anspruch 1, wobei das System von Röhren (6), das in besagter zweiter Schicht (4) enthalten ist, aus einer gewellten flexiblen Rohrleitung aus Kunststoffmaterial hergestellt ist, die als Rohrschlange angeordnet ist.

4. Kollektor nach Anspruch 1, wobei besagte zweite Schicht (4) noch Speicherelemente für Wärmeenergie in Form von latenter Wärme umfaßt, bestehend aus geschlossenen Zellen, die eine chemische Hydratverbindung mit einer hohen latenten Kristallisationswärme enthalten.

5. Kollektor nach Anspruch 1, wobei besagte zweite Schicht (4) weiterhin ein Drahtnetz oder eine andere Metallverstärkung für die Betonschicht aufweist.

6. Kollektor nach Anspruch 1, wobei besagte dritte Schicht (7) aus einer Aluminiumlage besteht.

7. Kollektor nach Anspruch 1, wobei besagte vierte Schicht (8) aus einem geschäumten Polyurethan besteht.

8. Kollektor nach Anspruch 1, wobei besagte vierte Schicht (8) aus geschlossenzellig extrudiertem Polyethylen besteht.

9. Kollektor nach einem der vorangehenden Ansprüche, dadurch gekennzeichnet, daß er ein zusammenhängendes wasserdichtes Element zur Dachabdeckung von Gebäuden darstellt, das von Fußgängern begehbar und von Motorfahrzeugen befahrbar ist.

10. Kollektor nach Anspruch 9, wobei besagte erste Schicht (2) aus wasserdichtem Material sich bis zu den Randbereichen der Dachabdeckung erstreckt, einschließlich Regenrinnen und/oder Abflußrohren.

11. Kollektor nach einem der vorangehenden Ansprüche, verwendet mit Hochtemperaturquellen für Wärmeenergie, wobei die Oberflächenschicht aus feuerfestem Material besteht.

12. Verfahren zum Bau eines Kollektors mit Schichtaufbau, in der Art, das er eine Basisschicht (8) aufweist, die aus einem Material mit hoher Wärmeisolierung hergestellt und über der ein Röhrensystem (6) angeordnet ist, durch das ein Wärmeaustauschfluid strömt, nach einem der vorangehenden Ansprüche, gekennzeichnet durch das Aufweisen der folgenden Schritte, die direkt am Verwendungsort durchgeführt werden:

— Anbringen besagter vierter Schicht (8) aus besagtem Isolationsmaterial auf einer lasttragenden Oberfläche (1) in vorgeformten halbstarren Platten oder durch Aufsprühen;

— Anbringen besagter dritten Schicht (7) aus Material mit hoher Reflexionskraft auf der vierten Schicht (8);

— Anbringen besagter Rohrschlange (6), die in einem oder mehreren Kreisläufen angeordnet ist, deren Enden aus dem Kollektor herausragen, auf der dritten Schicht (7);

— Gießen einer Betonschicht (4) mit Zusatzstoffen, die eine hohe Wärmeleitfähigkeit aufweist, nachdem vorher eventuell eine Metallverstärkung verlegt worden ist; und

— Überdecken des Ganzen mit besagter ersten Schicht (2), die durch Aufsprühen aufgebracht wird und auch die Oberflächen überdeckt, die dem Kollektor benachbart sind und an ihn anschließen, um eine einzige nahtlose wasserdichte Oberfläche zu bilden.

13. Kollektor nach einem der Ansprüche 1 bis 11, verwendet in der Klimaanlage eines Gebäudes, dadurch gekennzeichnet, daß er aufweist:

— eine oder mehrere Auffangflächen (C), bestehend aus dem Kollektor nach einem der Ansprüche 1 bis 11;

— eine oder mehrere Klimatisierungsflächen (U), bestehend aus einer Lage von Speicherelementen für Wärmeenergie in Form von latenter Wärme, in die ein System von Röhren verlegt ist, durch das ein Wärmeaustauschfluid strömt, wobei das Ganze in die Oberflächenschicht der Mauerwerkstrukturen des Gebäudes oder an eine andere geeignete Stelle verlagert wird;

— ein zentrales Speicherreservoir (A), das aus einer Mehrzahl von Schichten aus Wärmeenergie-Speicherelementen gebildet ist, die in ein Wärmeaustauschfluid getaucht sind;

— ein Verbindungs-, Regelungs-, Pump- und Kontrollsystem (I), das besagte Röhrensysteme der Auffang- und Klimatisierungsflächen mit besagtem zentralen Reservoir verbindet.

14. Kollektor nach Anspruch 13, verwendet in einer Anlage zur Produktion von elektrischer Energie, dadurch gekennzeichnet, daß er weiterhin aufweist:

— eine Rohrschlange (S), durch die ein niedrigsiedendes Fluid strömt und das innerhalb besagten zentralen Speicherreservoirs (A) angeordnet ist;

— eine Turbine (T) zur Produktion von elektrischer Energie, die von in besagter Rohrschlange verdampftem niedrigsiedendem Fluid angetrieben wird;

— ein Kondensator (F) für das niedrigsiedende Fluid, stromabwärts hinter besagter Turbine angeordnet, zum Speisen besagter Rohrschlange.

**Revendications**

1. Collecteur d'énergie thermique, et particulièrement d'énergie solaire — du type comprenant une couche de base (8) formée d'une matière de grande isolation thermique, sur laquelle est placé un système tubulaire (6) dans lequel s'écoule un fluide d'échange de chaleur — caractérisé en ce qu'il comprend une structure à couches composites, obtenue en mettant en place les couches individuelles directement sur le lieu d'utilisation et étant formée, à partir du côté tourné vers la source d'énergie, de:

— une première couche (2) en matière élastomère, ayant une grande rugosité superficielle et étanche à l'eau, ayant un très faible rayonnement et une très faible réflectivité, une grande capacité de déformation élastique et de résistance à des contraintes mécaniques sans déchirement;

— une seconde couche (4) en béton contenant des additifs, ayant une grande conductibilité thermique et dans laquelle est noyé ledit système tubulaire (6);

— une troisième couche (7) de matière de haute réflectivité;

— une quatrième couche (8) de ladite matière de grande isolation thermique.

2. Collecteur selon la revendication 1, caractérisé en ce que ladite première couche (2) est formée d'un latex de caoutchouc naturel de couleur noire, mélangé avec un agent coagulant seulement au moment de son application.

3. Collecteur selon la revendication 1, caractérisé en ce que le système tubulaire (6) incorporé à la seconde couche (4) est formé d'un tube flexible ondulé en matière plastique, profilé comme un serpentin.

4. Collecteur selon la revendication 1, caractérisé en ce que ladite seconde couche (4) comprend également des éléments (9) d'emmagasinage d'énergie thermique, sous forme de chaleur latente, se composant de cellules scellées contenant un composé chimique formé par un hydrate et ayant une grande chaleur latente de cristallisation.

5. Collecteur selon la revendication 1, caractérisé en ce que ladite seconde couche (4) comprend en outre un treillis en fil métallique ou une autre structure de renforcement métallique pour la couche de béton.

6. Un collecteur selon la revendication 1, dans lequel ladite troisième couche (7) se compose d'une tôle d'aluminium.

7. Un collecteur selon la revendication 1, dans lequel ladite quatrième couche (8) se compose de mousse de polyuréthane.

8. Un collecteur selon la revendication 1, dans lequel ladite quatrième couche (8) se compose de polyéthylène extrudé à cellules fermées.

9. Un collecteur selon une quelconque des revendications précédentes, caractérisé en ce qu'il forme un élément continu étanche à l'eau, permettant le passage de piétons et de véhicules automobiles, pour la couverture de bâtiments.

10. Un collecteur selon la revendication 9, dans lequel ladite première couche (2) de matière étanche à l'eau est prolongée pour recouvrir les zones périphériques de la couverture, notamment des gouttières et/ou des vidanges.

11. Un collecteur selon une quelconque des revendications précédentes, utilisé avec des sources d'énergie thermique à haute température, caractérisé en ce que la couche superficielle est formée d'une matière réfractaire.

12. Procédé pour la construction d'un collecteur ayant une structure composite, du type comprenant une couche de base (8) formée d'une matière de grande isolation thermique, sur laquelle est placé un système tubulaire (6) dans lequel s'écoule un fluide d'échange de chaleur, selon une quelconque des revendications précédentes, caractérisé en ce qu'il comprend les étapes suivantes, effectuées directement sur le lieu d'utilisation:

— mettre en place sur une surface de support de charge (1) ladite quatrième couche (8) de ladite matière isolante sous la forme de panneaux semirigides préfabriqués, ou bien par pulvérisation;

— mettre en place sur la quatrième couche (8) ladite troisième couche (7) de matière de haute réflectivité;

— mettre en place sur la troisième couche (7) ledit tube en serpentin (6), disposé sous la forme d'un ou plusieurs circuits dont les extrémités font saillie du collecteur;

— couler une couche de béton (4) avec des additifs, ayant une grande conductibilité thermique, après la mise en place précédente possible d'un renforcement métallique; et

— recouvrir l'ensemble avec ladite première couche (2) déposée par pulvérisation, en recouvrant également les surfaces proches de et adjacentes au collecteur de façon à former une seule surface étanche à l'eau et sans joint.

13. Collecteur selon une quelconque des revendications 1 à 11, utilisé dans une installation de conditionnement d'air pour un bâtiment, caractérisé en ce qu'il comprend:

— une ou plusieurs surfaces collectrices (C) se composant du collecteur conforme à une quelconque des revendications 1 à 11;

— une ou plusieurs surfaces de conditionnement (U) se composant d'une couche d'éléments d'emmagasinage d'énergie thermique sous forme de chaleur latente, dans laquelle est noyé un système de tubes dans lesquels passe un fluide d'échange de chaleur, l'ensemble étant réparti dans la couche superficielle des structures de maçonnerie du bâtiment, ou bien avec toute autre répartition appropriée;

— un réservoir d'emmagasinage central (A) formé d'une pluralité de couches d'éléments d'emmagasinage d'énergie thermique plongés dans un fluide d'échange de chaleur;

— un système d'interconnexion, de régulation, de pompage et de commande (I) qui relie lesdits systèmes de tubes des surfaces collectrices et de conditionnement avec ledit réservoir central.

14. Collecteur selon la revendication 13, utilisé dans une installation de production d'énergie électrique, caractérisé en ce qu'il comprend en outre:

— un serpentin (S) dans lequel s'écoule un fluide à bas point d'ébullition, disposé à l'intérieur dudit réservoir d'emmagasinage central (A);

— une turbine (T) pour la production d'énergie électrique, actionnée par ledit fluide à bas point d'ébullition vaporisé dans ledit serpentin;

— un condenseur (F) du fluide à bas point d'ébullition, placé en aval de ladite turbine pour l'alimentation dudit serpentin.

FIG. 1A

FIG. 1*B*

# FIG. 2

# FIG. 3